**Europäisches Patentamt**

(19) **European Patent Office**

**Office européen des brevets**

(11) Publication number: **0 199 412**
**B1**

(12) # EUROPEAN PATENT SPECIFICATION

(45) Date of publication of the patent specification:
06.12.89

(51) Int. Cl.⁴: **B 07 C 3/06,** G 06 K 13/04

(21) Application number: 86200637.6

(22) Date of filling: 16.04.86

(54) **Diverting mechanism of a device for sorting items.**

(30) Priority: 18.04.85 NL 8501131

(43) Date of publication of application:
29.10.86 Bulletin 86/44

(45) Publication of the grant of the patent:
06.12.89 Bulletin 89/49

(84) Designated Contracting States:
BE DE FR GB IT

(56) References cited:
EP-A-0 043 155
DE-A-3 150 328
FR-A-2 068 856
GB-A-700 674
US-A-3 027 830
US-A-4 251 000
US-A-4 288 069

(73) Proprietor: **Koninklijke PTT Nederland N.V., P.O. Box 95321, NL- 2509 CH The Hague (NL)**

(72) Inventor: **Van Leijenhorst, Harro Mijndert, 97 Veulenweide, NL- 2727 DN Zoetermeer (NL)**
Inventor: **Prins, Geert Jan, 70 Rooseveltlaan, NL- 2625 GP Delft (NL)**
Inventor: **Smeets, Joseph Eugène Hubert, 3d Burgemeester van Karnebeeklaan, NL- 2585 BA Den Haag (NL)**
Inventor: **Suringh, Jan Frederik, 58 Prunuslaan, NL- 3053 ZL Rotterdam (NL)**

EP 0 199 412 B1

## Description

### A. Background of the Invention

The invention relates to a diverting mechanism of a device for sorting items which flow in a flow direction from one inlet towards three outlets, the diverting mechanism comprising two vanes for directing each item towards a selected one of the outlets, the vanes being individually mowable by driving means causing movement of each vane in a direction transverse to the flow direction.

### 2. State of the Art

A diverting mechanism of the aforesaid type is known from the US Patent Specification 3 027 830. This specification discloses a diverting mechanism of the abovementioned sort, which forms part of a sorting device for postal articles, such as letters and the like. In this sorting device the postal articles to be sorted are led from an inlet store along a recognition system, where certain characteristics of the postal articles led along are scanned and processed, after which the postal articles are supplied to a diverting mechanism, which consists of a pair of vanes, rotatable around two parallel shafts, and each capable of taking up two discrete positions, due to which this known diverting mechanism has three outlets. Each of these outlets debouches into an outlet store. In this case the positions of the vanes are controlled from the system in which the scanned characteristics of the postal articles are processed. The control of the positions of each of the vanes takes place by means of a pair of coils provided with a sliding core, one end of each of these sliding cores being pivotally mounted on one of the ends of a bridge portion, which is rigidly connected to the relevant vane and can rotate around the same shaft as the vane.

The advantage obtained when using a double-vane diverting mechanism instead of e.g. a single-vane diverting mechanism is that with a double-vane diverting mechanism one or both vanes need not undergo more than one change of position for any change into another outlet position (so from outlet 1 to 2, 1 to 3, 2 to 1, 2 to 3, 3 to 1 or from 3 to 2). So it will not at all be necessary to take up an intermediate position, which is the case with a single-vane diverting mechanism with three outlets (e.g. the change from outlet 1 into outlet 3 takes place via outlet 2).

A drawback of the known diverting mechanism is that two coil-sliding corecombinations will be needed for operating each of the vanes. Apart from the fact that this is a comparatively expensive solution, which occupies relatively much room, the change-over speed is comparatively low, inter alia because of the relatively considerable mass of the two sliding cores. Moreover, the position of each of the vanes depends on the tensile force of the relevant coil, due to which the positions of the vanes are relatively sensitive to disturbances. Besides an electric current has constantly to flow through one of the coils in any position of each of the vanes, which is also a drawback in view of the cost of energy and the heat dissipation.

### B. Summary of the invention

The object of the invention is to overcome the drawbacks of the known diverting mechanism, and for that purpose it provides a diverting mechanism of the sort mentioned in the preamble, characterized in that the driving means comprises a cam rotatable about an axis of rotation by rotation means and two first cam followers firmly connected with respective ones of said two vanes and both engaging said cam.

In order to come to a very good guarantee that the correct position of each of the vanes will always be obtained and maintained, according to a preferred embodiment of the invention said vanes respectively have second cam followers and said first cam followers as well as said second cam followers are both engaging said cam which is rotatable by said rotating means.

The shape of the cam will preferably be such that with the same angular rotation of this cam the different combinations of discrete positions of each of the vanes that are of importance for the functioning as a diverting mechanism with three outlets will always be taken up. With this measure it is achieved that the change-over time of the diverting mechanism will always be the same, and, consequently, optimum with any change of position.

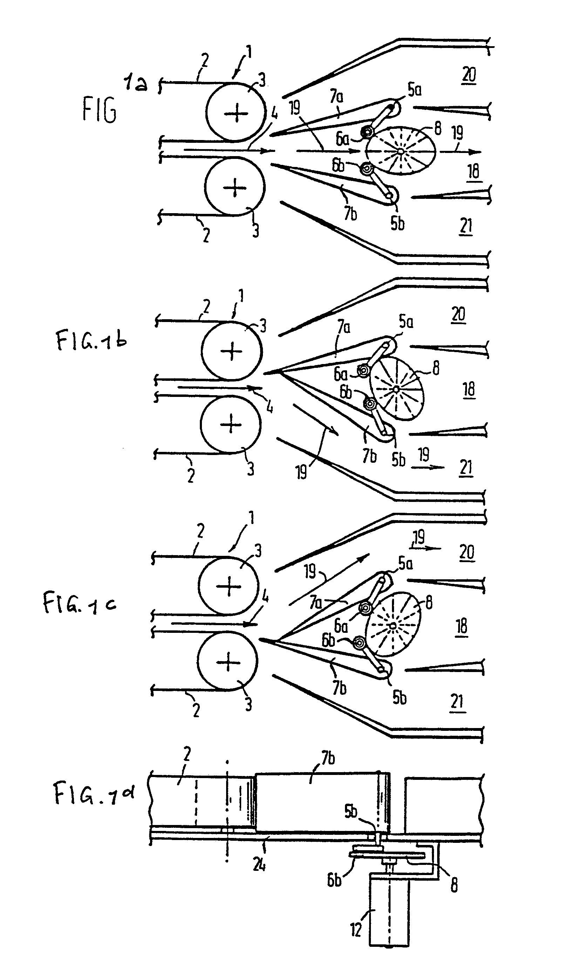

When the positions of each of the vanes for the three possible outlet positions are considered, it will appear that in one of the three outlet positions (see e.g. fig. 1a) both vanes are in a relatively outward position, and that in the remaining two outlet positions (see e. g. fig. 1b and 1c) one of the two vanes is in a relatively outward position. If within a certain angle of rotation the various outlet positions have consecutively to be reached, the shape of the cam will, when turned in the same direction, have to be such that within that certain angle of rotation each of the cam followers and, consequently, each of the vanes will consecutively take up two relatively outward positions, followed by one relatively inward position. It is further desirable that the various vane positions will be taken up with an equal angular rotation, or with an angular rotation which is one third of the aforesaid angle of rotation within which it must be feasible to reach each of the three possible outlet positions. With a view to the lowest possible wear and tear it is, finally, desirable that the transitions between the various positions will take place as smoothly as possible. A cam of which the distance between its outside and its centre of rotation as a function of its angle of rotation corresponds to a great extent with the mathematical representation $r = A + B \cos (qf)$ well meets the aforeset criteria. In this mathematical representation $r$

is the said distance between the outside and the centre of rotation of the cam, A is a constant, equal to the average value of r, B is a constant representing the amplitude of the radial variation and, consequently, a measure for the amplitude of the cam followers and the vanes, q is equal to $2\pi / \emptyset$, in which $\emptyset$ is the aforesaid angle of rotation, within which it must be possible to reach each of the outlet positions of the diverting mechanism and f represents the angular rotation of the cam.

In order to equalize the speeds occurring as much as possible, it will be favourable to add odd higher harmonics to the variation of r as a function of f, due to which, the mathematical representation of the cam which is preferably utilizable will be:

$$r = A + B \cos (qf) + C \cos (3 qf) + + D \cos (5 qf) + \dots .,$$

in which C and D indicate the degree of influence of the respective higher harmonics. For the rest it is remarked that the constants B, C and D can be positive or negative.

The movement of the second cam follower is, as mentioned already before, derived from the movement of the first cam follower and is an inverted replica of the same. If the second cam follower follows the same cam as the first cam follower and the shape of the cam corresponds with one of the mathematical representations given before, the second cam follower of each of the vanes will have to follow the cam in a position of which the angle $\alpha$ between the connecting line of the point of adjacency of the second cam follower with the centre of rotation of the cam and the connecting line of the point of adjacency at the cam of the first cam follower with the same centre of rotation is equal to $\pi / q$, or $\alpha$ equals $\emptyset / 2$. Preferably q has a value in the range of 1 up to 4 inclusive.

According to a further elaboration of the embodiment of the invention the cam is driven by a tachometrically controlled direct-current servomotor, the position of the shaft of which is controlled from a control device, which forms part of the sorting device. As it has appeared that the starting velocity of a servomotor will be the highest if the internal mass moment of inertia (so of the rotor) is equal to the external mass moment of inertia (so of the driven system), preferably the transmission ratio between the drive motor and the vane driven via the cam has such a value that the external (virtual) mass moment of inertia is about equal to the internal mass moment of inertia of the drive motor.

Preferably each of the vanes is rotatable around a shaft which is in a position transversely to the flow of items to be sorted; in another embodiment each of the vanes is translatable along a path which is substantially transversely to the flow of items.

It is remarked that the British patent GB 700 674 discloses driving means for a vane in a sorting device for letters. The driving means comprise a (continuous) rotating member, releasable coupling means, a (kind of) cam and a (kind of) cam follower. For (partially) rotating the vane, the eccentric cam is coupled to the rotating member for some time. The eccentric movement of the cam (an eccentrically mounted roller bearing) moves, by means of the cam follower, the vane. Thus, from this publication it is known to drive one (single) vane by means of a cam and a (double sided) cam follower. As the disclosure relates to a single vane system, the present invention in the contrary concerns a two vanes system like the system known from the US Patent Specification 3 027 830 mentioned under par. A. 2. - in which, according to the invention, both vanes are driven by one and the same cam, viz. by means of either first or first and second cam followers, these cam followers both being in touch with the same cam.

## C. References

US-3 027 830
GB-700 674

## D. Description of the figures and of the embodiments

The invention will be further explained hereinafter with the help of some figures.

Figures 1a, 1b and 1c show three discrete positions of a diverting mechanism according to an embodiment of the invention in which each of the vanes is rotatable around a shaft and is provided with one cam follower; figure 1d shows a cross-sectional view of this embodiment.

Figures 2a, 2b and 2c show three discrete positions of a diverting mechanism according to an embodiment of the invention in which each of the vanes is rotatable and has two cam followers, a first and a second one; figure 2d shows a cross-sectional view of it.

Figures 3a, 3b and 3c show three discrete positions of a diverting mechanism according to an embodiment of the invention in which the vanes both are translatable along a path and are provided with two cam followers.

Figure 4 shows an embodiment for tachometric control of the cam.

Figures 1a, 1b and 1c show three discrete positions of a diverting mechanism according to an embodiment of the invention. Items to be sorted - such as postal articles - are supplied to the diverting mechanism in the direction of arrow 4 by a feeding device 1, consisting of conveyor belts 2, turning round pulleys 3. The diverting mechanism consists of two vanes 7a, 7b which are rotatable mounted round bearings 5a, 5b. Each of the vanes 7a, 7b is provided with cam followers 6a, 6b which are rigidly connected to the vanes 7a, 7b and which are each kept pressed against a cam 8 by a spring not shown in the figures. This cam 8 comes up to the formula mentioned in the preamble, in which q = 2, due to which each of three outlet positions 18, 20 and 24 will be reached twice, if the cam 8 entirely turns round once. Consequently, ø equals π, in other words, each of the three outlet positions 18, 20 and 24 can be reached within an angle of rotation of 180° of the cam 8. So each of the outlet situations can be changed into one of the other two outlet situations by turning the cam 8 either to the right or to the left over an angle α of 1/3 x 180° = 60°. The position of the cam 8 is adjusted by means of a tachometrically controlled direct-current servomotor 12.

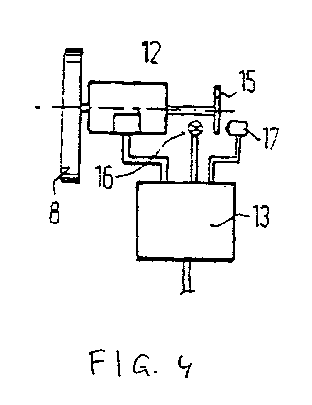

The system for taking up the correct position of the shaft is shown in figure 4. The cam 8 is rotatable to the left as well as to the right and is driven by a servomotor 12 which is controlled by a from a control circuit 13 and of the shaft of which, moreover, a control cam 15 is mounted. This control cam 15 is provided with recesses 14 and co-operates with a combination of a light source 16 and a photocell 17. These combination 16, 17 is also connected to the control circuit 13. Owing to this the control circuit 13 receives information concerning the position of the cam 8 and, consequently, about the position of the vanes 7a, 7b.

In the position of the cam 8 shown in figure 1a the vanes 7a, 7b take up such a position that the flow of items 4 ends in the outlet store 18 along the path represented by arrows 19.

If the cam 8 is turned over an angle of 60° to the right by the electromotor 12, the vane 7a will take up a position in which the free end of the vane 7b will take up such a higher position in the figure that the flow of items 4 is deflected via the flank of the vane 7b and will end in outlet store 21.

If after said turning the cam 8 is once again turned to the right over an angle of 60°, the vane 7b will take up a position in which the vane 7a will take up such a lower position in the figure that the flow of items 4 is deflected via the flank of the vane 7a and will end in outlet store 20. If after this the cam 8 is again turned 60° to the right, the vanes 7a, 7b will take up positions in which the flow of items 4 will end in outlet store 18. If, however, the cam 8 is not turned to the right, but 60° to the left, the vanes 7a, 7b will take up again the positions in which the flow of items 4 will end in outlet store 21. In this way it will be possible to reach from any position each of the two other positions by turning the cam 8 over an angle of 60° either to the right or to the left.

Figure 1d shows a view of the embodiment as represented in figure 1a, notably seen from the bottom. It is remarked that the base plate 24, shown in figure 1d, on which the various components mentioned are mounted, has been left out in the figures 1a, 1b and 1c for the sake of clearness.

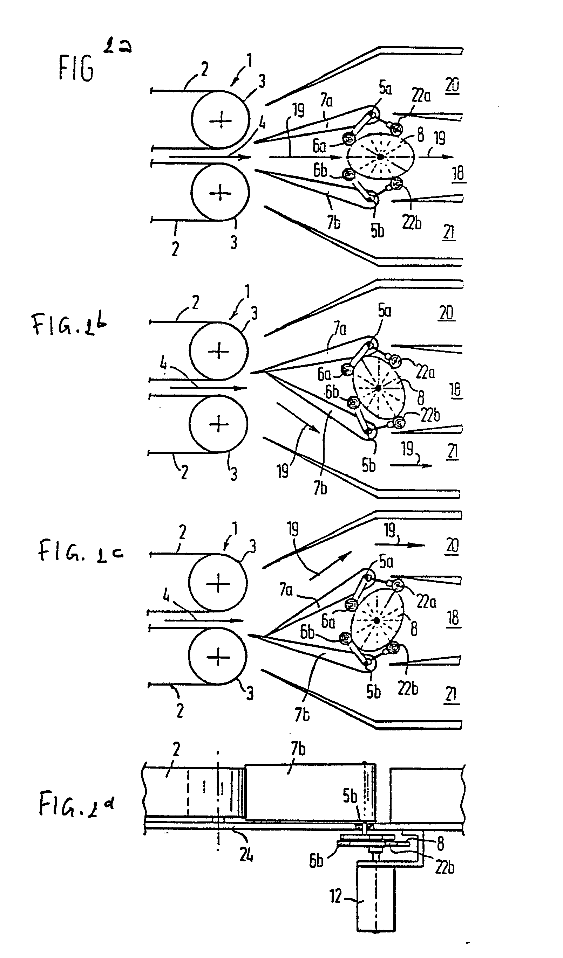

Figure 2 shows an improved elaboration of the embodiment of the invention shown in figure 1. This improvement consists in that each of the vanes 7a, 7b has been provided with a second cam follower 22a, 22b, which follows the cam 8 in a position which corresponds with an angular rotation of the cam 8 of 90°. This angle of 90° corresponds with the angle α which is mentioned in the preamble and which equals ø / 2 in which case ø = π and, consequently, α = π / 2 as already posited in the description of figure 1. Owing to the fact that the vanes 7a, 7b are provided with said second cam followers 22a and 22b it is achieved that these vanes will always take up a fixed position, which cannot be disturbed by e.g. the pressure of the flow of items 4, 19. This involves that the springs mentioned in the description of figure 1, but not shown, and serving to keep the cam followers 6a and 6b pressed against the cam 8, can be dispensed with. It is marked that the second cam followers 22a and 22b can have been mounted on the vanes 7a and 7b in a somewhat springy way, in order to get rid of any back lash. For the rest the figures 2a up to 2d inclusive fully correspond with the figures 1a up to 1d inclusive.

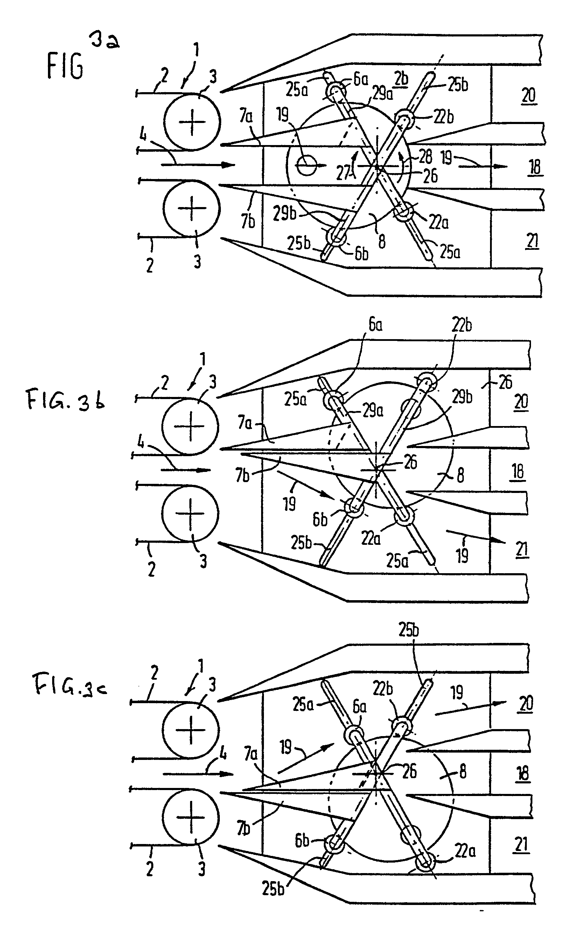

Figure 3 shows an embodiment of the invention in which the vanes 7a and 7b can make a translating movement under the influence of the turning of the cam 8. In this embodiment the shape of the cam 8 also comes up to the mathematical formula mentioned in the preamble, for which in this embodiment q = 1 has been chosen, which implies that each of the three outlet positions 18, 20 and 21 will be reached once, if the cam 8 entirely turns round once. Consequently, the angle ø equals 2π and so the angle α over which the cam 8 has to be turned to change the outlet position (18, 20 or 21) of the diverting mechanism will be 1/3 x 360° = 120°.

The flow of items to be sorted 4 is supplied by the feeding device 1 to a pair of vanes 7a, and 7b, which are translatable in the slotted holes 25a and 25b, recessed in the base plate 26, via the yokes 29a and 29b, respectively. The yokes 29a and 29b are provided with the first cam followers 6a and 6b and the second cam followers 22a and 22b. The cam 8 is rotatable around its shaft 26 and is - as indicated in the description of the preceding embodiments - driven by a servomotor, which is tachometrically controlled from a control device, but which is not shown in figure 3. The cam 8 has, as already described, three positions with an angle of 120° between them. Because of the fact that each of the yokes 29a and 29b has been provided with a first cam follower 6a, 6b, respectively as well as with a second cam follower 22a, 22b, respectively, the position of the vanes 7a and 7b will always be determined exactly and free from disturbance factors.

In figure 3a the cam 8 has such a position that the flow of items 4 will move between the vanes 7a and 7b in the direction of the arrows 19 to the outlet store 18. If the cam 8 is turned over an angle of 120° to the right, as indicated by the arrow 27, the situation represented in figure 3a will be reached. If, on the contrary, the cam 8 in figure 3b is turned to the left, as indicated by the arrow 28, the situation shown in figure 3c will be obtained.

Figure 3b shows that under the influence of the pressure of the rotating cam 8 the vane 7b has moved upwards along the line of the slotted hole 25b, in consequence of which the flow of items 4 is now deflected via the outer flank of the vane 7b in the direction indicated by the arrows 19 and will end in the outlet store 21. For the rest it can be deduced from figure 3 that during the time the cam 8 is turned to the right the vane 7a too will be moved upwards along the line of the slotted hole 25a via the first cam follower 6a, which is mounted on the yoke 29a, which upward movement, however, takes place during the first half of the turning process of the cam 8; during the second half of it the vane 7a will drop again up to its original height.

Figure 3c shows the situation after the cam 8 in figure 3a has turned to the left over an angle of 120°. In a similar way as in which the vane 7b has obtained a higher position in the preceding case represented in figure 3b, the vane 7a in figure 3c has obtained a lower position, in consequence of which the flow of items 4 is deflected in the direction indicated by the arrows 19 by the outer flank of the vane 7a, and will end in the outlet store 20. If hereafter the cam 8 is once again turned to the left over an angle of 120°, the situation represented in figure 3b will arise. If the cam 8 in figure 3c is turned to the left 120°, the situation of figure 3a will arise.

It is remarked that apart from the use for driving the vanes 7 (a, b), the driving part of the present invention can very well be utilized for driving other quickly intermittently moving parts in for example knitting machines or other textile machines or in electronic typewriters or computer printers.

## Claims

1. Diverting mechanism of a device for sorting items which flow in a flow direction from one inlet towards three outlets, the diverting mechanism comprising two vanes for directing each item towards a selected one of the outlets, the vanes being individually mowable by driving means causing movement of each vane in a direction transverse to the flow direction, characterized in that the driving means comprises a cam (8) rotatable about an axis of rotation by rotation means (12) and two first cam followers (6a, 6b) firmly connected with respective ones of said two vanes and both engaging said cam (8).

2. Diverting mechanism in accordance with claim 1, characterized in that said vanes (7a, 7b) respectively have second cam followers (22a, 22b) and said first cam followers (6a, 6b) as well as said second cam followers are both engaging said cam (8) which is rotatable by said rotating means (12).

3. Diverting mechanism in accordance with claim 1, characterized in that the shape of the cam (8) is such that with the same angular rotation of this cam (8) the different combinations of discrete positions of each of the vanes (7a, 7b) that are of importance for the functioning as a diverting mechanism with three outlets will always be taken up.

4. Diverting mechanism in accordance with claim 3, characterized in that the distance between the outside of the cam (8) and its centre of rotation as a function of its angle of rotation corresponds with the mathematical representation $r = A + B \cos (qf) + C \cos (3 qf) + D \cos (5 qf) + \ldots$ , in which r is the said distance, A is a constant corresponding with the average value of r, B is a constant indicating the amplitude of the ground wave, and C and D indicate the amplitude of the odd higher harmonics, in which case B, C and D can be positive or negative, q is a positive, whole number, equal to $2 \pi / \varnothing$ in which $\varnothing$ is the angle of rotation of the cam (8), within which it must be possible to reach each of the outlet positions (18, 20, 21) of the diverting mechanism, and f is the angular rotation of the cam (8).

5. Diverting mechanism in accordance with claim 4, characterized in that each of the vanes (7a, 7b) has a second cam follower (22a, 22b), which is engaged to the cam (8) in a position of which the angle $\alpha$ between the connecting line of the point of engagement of the second cam follower (22a, 22b) with the centre of rotation of the cam (8) and the connecting line of the point of engagement at the cam (8) of the first cam follower (6a, 6b) with the same centre of rotation is equal to $\varnothing / 2$.

6. Diverting mechanism in accordance with claim 5, characterized in that q has a value which is in the range of 1 up to 4 inclusive.

7. Diverting mechanism in accordance with claim 1, characterized in that the cam (8) is driven by a tachometrically controlled direct-current servomotor (12), the position of the shaft of which is controlled from a control device (13), which forms part of the sorting device.

8. Diverting mechanism in accordance with claim 7, characterized in that the transmission ratio between the drive motor (12) and the vane (7) driven via the cam (8) has such a value that the external mass moment or virtual mass moment of inertia is about equal to the internal mass moment of inertia of the drive motor (12).

9. Diverting mechanism in accordance with claim 1, characterized in that each of the vanes (7a, 7b) is rotatable around a shaft (5 and 5a, 5b, respectively), which is in a position transversely to the flow of items to be sorted (4).

10. Diverting mechanism in accordance with claim 1, characterized in that each of the vanes (7a, 7b) is translatable along a path (25a, 25b), which is substantially transversely to the flow of items to be sorted (4).

**Revendications**

1. Mécanisme de déviation d'un dispositif pour trier des objets qui avancent suivant une direction de défilement depuis une entrée vers trois sorties, le mécanisme de déviation comprenant deux lames pour diriger chaque objet vers une sortie sélectée, les lames étant manoeuvrables individuellement par un moyen de commande qui provoque le mouvement de chaque lame suivant une direction transversale à la direction de défilement, caractérisé en ce que le moyen de commande comprend une came (8) qu'un moyen de rotation (12) peut faire tourner autour d'un axe de rotation, ainsi que deux premiers galets de came (6a, 6b), ou autres éléments suiveurs de came, qui sont chacun reliés rigidement à une lame correspondante et sont tous deux en contact avec la came.

2. Mécanisme selon la revendication 1, caractérisé en ce que les lames (7a, 7b) sont pourvues chacune d'un second galet de came (22a, 22b), ou autre élément suiveur de came, et les premiers (6a, 6b) comme les seconds galets sont en contact avec la came (8) que le moyen de rotation (12) peut faire tourner.

3. Mécanisme selon la revendication 1, caractérisé en ce que la forme de la came (8) est telle qu'une même rotation angulaire de cette came (8) permet d'obtenir les différentes combinaisons de positions discrètes de chacune des lames (7a, 7b), qui sont importantes pour le fonctionnement en tant que mécanisme de déviation à trois sorties.

4. Mécanisme selon la revendication 3, caractérisé en ce que la distance entre le profil extérieur de la came (8) et son centre de rotation en fonction de l'angle de rotation de la came correspond à l'expression mathématique $r = A + B \cos(qf) + C \cos(3 qf) + D \cos(5 qf) + ....$, où $r$ est ladite distance, $A$ est une constante correspondant à la valeur moyenne de $r$, $B$ est une constante indiquant l'amplitude de l'onde fondamentale et $C$ et $D$ indiquent l'amplitude des harmoniques impairs d'ordre plus élevé, $B$, $C$ et $D$ pouvant être positives ou négatives, $q$ est un nombre entier, positif, égal à $2\pi / \varnothing$, où $\varnothing$ est l'angle de rotation de la came (8) à l'intérieur duquel il doit être possible d'atteindre chacune des positions de sortie (18, 20, 21) du mécanisme de déviation, et $f$ est la rotation angulaire de la came (8).

5. Mécanisme selon la revendication 4, caractérisé en ce que chacune des lames (7a, 7b) est pourvue d'un second galet de came (22a, 22b) qui est en contact avec la came (8) en un point où l'angle $\alpha$ entre la ligne reliant le point de contact du second galet de came (22a, 22b) au centre de rotation de la came (8) et la ligne reliant le point de contact avec la came (8) du premier galet de came (6a, 6b) au même centre de rotation est égal à $\varnothing / 2$.

6. Mécanisme selon la revendication 5, caractérisé en ce que $q$ possède une valeur de 1 à 4 compris.

7. Mécanisme selon la revendication 1, caractérisé en ce que la came (8) est entraînée en rotation par un servomoteur (12) à courant continu et à commande tachymétrique, la position de l'arbre du servomoteur étant commandée par un dispositif de commande (13) qui fait partie du dispositif de triage.

8. Mécanisme selon la revendication 7, caractérisé en ce que le rapport de transmission entre le moteur d'entraînement (12) et la lame (7) manoeuvrée par l'intermédiaire de la came (8), possède une valeur telle que le moment d'inertie massique externe ou moment d'inertie massique virtuelle est environ égal au moment de l'inertie massique interne du moteur d'entraînement (12).

9. Mécanisme selon la revendication 1, caractérisé en ce que chacune des lames (7a, 7b) est rotative autour d'un axe (5 et 5a, 5b, respectivement) dont l'emplacement est prévu latéralement par rapport au flux d'objets (4) à trier.

10. Mécanisme selon la revendication 1, caractérisé en ce que chacune des lames (7a, 7b) est déplaçable en translation le long d'un trajet (25a, 25b) qui est sensiblement transversal au flux d'objets (4) à trier.

**Patentansprüche**

1. Sortiermechanismus einer Vorrichtung zum Sortieren von Objekten, die in einer Flussrichtung von einem Einlass zu drei Ausmündungen fliessen, wobei zur Führung jedes Objektes zu einer darunter ausgewählten Ausmündung der Sortiermechanismus zwei Flügel aufweist, die durch Antriebsmittel individuell bewegbar sind, um eine Bewegung jedes Flügels in einer zur Flussrichtung transversalen Richtung zu bewirken, dadurch gekennzeichnet, dass das Antriebsmittel eine Steuerscheibe (8), die durch Rotationsmittel (12) um eine Drehachse drehbar ist, und zwei erste Steuerscheiben-Folger (6a,6b) umfasst, die fest mit je einem dieser Flügel gekoppelt sind und beide mit dieser Steuerscheibe (8) im Einsatz sind.

2. Sortiermechanismus nach Anspruch 1 dadurch gekennzeichnet, dass diese Flügel (7a, 7b) je einen zweiten Steuerscheiben-Folger (22a, 22b) aufweisen, und dass sowohl die ersten Folger (6a, 6b) als auch die zweiten Folger mit dieser durch dieses Rotationsmittel (12) drehbaren Steuerscheibe (8) im Einsatz sind.

3. Sortiermechanismus nach Anspruch 1 dadurch gekennzeichnet, dass die Form der Steuerscheibe (8) derart ist, dass die verschiedenen Kombinationen der diskreten Positionen jedes dieser Flügel (7a, 7b), die für die Arbeitsweise als ein Sortiermechanismus mit drei Ausmündungen wichtig sind, immer mit derselben Winkelrotation dieser Steuerscheibe (8) durchgeführt werden.

4. Sortiermechanismus nach Anspruch 3, dadurch gekennzeichnet, dass der Abstand zwischen der Aussenseite der Steuerscheibe (8) und ihrem Rotationszentrum als Funktion ihres Rotationswinkels der mathematischen Darstellung r = A + B cos (qf) + C cos (3 qf) + D cos (5 qf) + ..., entspricht, worin r dieser Abstand, A eine dem Durchschnittswert von r entsprechende Konstante und B eine die Amplitude der Grundwelle angebende Konstante ist und C und D die Amplitude der ungeraden oberen Harmonischen angeben, wobei im betreffenden Fall B, C und D positiv oder negativ sein können, und worin q eine positive ganze Zahl gleich $2\pi/\varnothing$ ist, wobei ø der Rotationswinkel der Steuerscheibe (8), innerhalb welchem möglich sein muss, jede der Ausmündungspositionen (18, 20, 21) des Sortiermechanismus zu erreichen, und f die Winkelrotation der Steuerscheibe (8) ist.

5. Sortiermechanismus nach Anspruch 4, dadurch gekennzeichnet, dass jeder Flügel (7a, 7b) einen zweiten Steuerscheiben-Folger (22a, 22b) aufweist, der mit der Steuerscheibe (8) in einer Position im Einsatz ist, bei der der Winkel α zwischen der Verbindungslinie des Einsatzpunktes des zweiten Folgers (22a, 22b) mit dem Rotationszentrum der Steuerscheibe (8) und der Verbindungslinie des Einsatzpunktes des ersten Folgers (6a, 6b) an der Steuerscheibe (8) mit demselben Rotationszentrum gleich ø/2 ist.

6. Sortiermechanismus nach Anspruch 5, dadurch gekennzeichnet, dass q einen Wert im Bereich von 1 bis und mit 4 aufweist.

7. Sortiermechanismus nach Anspruch 1 dadurch gekennzeichnet, dass die Steuerscheibe (8) durch einen tachometrisch gesteuerten Gleichstrom-Servomotor (12) angetrieben ist mit einer Achse, deren Lage durch eine zur Sortiervorrichtung gehörige Steuervorrichtung (13) gesteuert ist.

8. Sortiermechanismus nach Anspruch 7, dadurch gekennzeichnet, dass das Übertragungsverhältnis zwischen dem Antriebsmotor (12) und dem über die Steuerscheibe (8) angetriebenen Flügel (7) einen solchen Wert aufweist, dass das externe Massenmoment oder virtuelle Massenträgheitsmoment ungefähr gleich dem internen Massenträgheitsmoment des Antriebsmotors (12) ist.

9. Sortiermechanismus nach Anspruch 1 dadurch gekennzeichnet, dass jeder Flügel (7a, 7b) um eine Achse (5 bzw. 5a, 5b) drehbar ist, die sich in einer zum Fluss der zu sortierenden (4) Objekte transversalen Position befindet.

10. Sortiermechanismus nach Anspruch 1 dadurch gekennzeichnet, dass jeder Flügel (7a, 7b) entlang einem zum Fluss der zu sortierenden (4) Objekte im wesentlichen transversalen Weg (25a, 25b) verschiebbar ist.

EP 0 199 412 B1

FIG 1a

FIG.1b

FIG.1c

FIG.1d

FIG 1a

FIG. 1b

FIG. 1c

FIG. 1d

FIG. 3a

FIG. 3b

FIG. 3c

FIG. 4